(19) Europäisches Patentamt
European Patent Office
Office européen des brevets

(11) **EP 4 280 100 A1**

(12) **EUROPEAN PATENT APPLICATION**
published in accordance with Art. 153(4) EPC

(43) Date of publication:
**22.11.2023 Bulletin 2023/47**

(21) Application number: **21922487.0**

(22) Date of filing: **23.11.2021**

(51) International Patent Classification (IPC):
**G06K 9/62** $^{(2022.01)}$

(86) International application number:
**PCT/CN2021/132577**

(87) International publication number:
**WO 2022/160897 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.01.2021 CN 202110109561**

(71) Applicant: **Shanghai Westwell Technology Co., Ltd.**
**Shanghai 200050 (CN)**

(72) Inventors:
• **TAN, Limin**
**Shanghai 200050 (CN)**
• **YOU, Chaoqin**
**Shanghai 200050 (CN)**
• **ZHAO, Zhao**
**Shanghai 200050 (CN)**

(74) Representative: **Canzler & Bergmeier**
**Patentanwälte**
**Partnerschaft mbB**
**Despag-Straße 6**
**85055 Ingolstadt (DE)**

(54) **BINOCULAR PARALLAX ESTIMATION METHOD, MODEL TRAINING METHOD AND RELATED DEVICE**

(57) Disclosed are a binocular parallax estimation method, a model training method and a related device. The model training method comprises: acquiring a sample left image, a sample right image and a parallax label (S 110); taking the sample left image and the sample right image as an input of a binocular parallax estimation model, wherein the binocular parallax estimation model comprises a feature extraction network module, a matching cost calculation module, a single-scale cost aggregation module, a multi-scale cost aggregation module and a parallax regression model; and calculating an error between the parallax label and an estimated parallax, so as to train the binocular parallax estimation model (S130). By means of the method and apparatus, the defects in a method with a large amount of calculation, a long time consumed, and poor effects in terms of an article edge and a textureless region are solved by using a new network model structure and an optimized model training method, thereby prompting the application of a parallax estimation method based on a binocular image in different fields.

S110 — Acquiring a sample left image, a sample right image, and a parallax label

S120 — Taking the sample left image and the sample right image as inputs of a binocular parallax estimation model to obtain an estimated parallax

S130 — Calculating an error between the parallax label and the estimated parallax, so as to train the binocular parallax estimation model

Fig. 1

**Description**

FIELD

The present disclosure relates to the field of image processing, and in particular to, a binocular parallax estimation method, a model training method and a related device.

BACKGROUND

Estimating a parallax through binocular images is a fundamental task in the field of computer vision, and the accuracy and instantaneity of estimation directly determine the performance of subsequent tasks such as recognition and tracking. An existing neural network-based parallax estimation algorithm mostly uses three-dimensional (3D) convolution in a cost aggregation process, which has a large amount of computation, long time consumed, and poor effects in estimating an edge and large-area textureless region of an object. As a result, these defects limit the application of the existing method in fields of automatic driving, security protection, V2X, and the like.

In response to the above problem, how to overcome the defects in a method with a large amount of computation, long time consumed, and poor effects in estimating an edge and textureless region of an object by using a new network model structure and an optimized model training method, thereby prompting the application of a parallax estimation method based on a binocular image in different fields. It is an urgent technical problem needing to be solved by a person skilled in the art.

SUMMARY

In order to overcome the defects in the existing technology above, the present disclosure provides a binocular parallax estimation method, a model training method and a related device.

According to one aspect of the present disclosure, a binocular parallax estimation model training method is provided, including:

acquiring a sample left image, a sample right image, and a parallax label;

taking the sample left image and the sample right image as inputs of a binocular parallax estimation model, wherein the binocular parallax estimation model includes:

a feature extraction network module, configured for extracting left feature images of the input sample left image on multiple scales and extracting right feature images of the input sample right image on multiple scales;

a matching cost calculation module, configured for calculating matching costs of the left feature images and the right feature images on the same scales;

a single-scale cost aggregation module, configured for performing single-scale cost aggregation on the matching costs of the respective scales output by the matching cost calculation module;

a multi-scale cost aggregation module, configured for performing multi-scale cost aggregation on the single-scale aggregation costs output by the single-scale cost aggregation module; and

a parallax regression model, configured for performing parallax regression on the multi-scale aggregated costs output by the multi-scale cost aggregation module to obtain an estimated parallax of the sample left image and the sample right image; and

calculating an error between the parallax label and an estimated parallax, so as to train the binocular parallax estimation model.

In some embodiments of the present disclosure, the method also includes:

extracting, by the feature extraction network module of the binocular parallax estimation model, left feature images of the input left image on multiple scales and extracting, by the feature extraction network module of the binocular parallax estimation model, right feature images of the input right image on multiple scales;

calculating, by the matching cost calculation module of the binocular parallax estimation model, matching costs of the left feature images and the right feature images on the same scales;

performing, by the single-scale cost aggregation module of the binocular parallax estimation model, single-scale cost aggregation on the matching costs of the respective scales output by the matching cost calculation module;

performing, by the multi-scale cost aggregation module of the binocular parallax estimation model, multi-scale cost aggregation on the single-scale aggregated costs output by the single-scale cost aggregation module; and

performing, by the parallax regression model of the binocular parallax estimation model, parallax regression on the multi-scale aggregated costs output by the multi-scale cost aggregation module to obtain an estimated parallax of the sample left image and the sample right image.

In some embodiments of the present disclosure, the matching costs of the left feature images and the right feature images on the same scales are calculated according to the following formula:

$$C^s(d, h, w) = \frac{1}{N} \langle F_l^s(h, w), F_r^s(h, w - d) \rangle$$

where $C^s(d, h, w)$ represents a matching cost of parallax d at position (h, w) under scale s, wherein h and w respectively represent horizontal and vertical coordinates of a feature image; $F_l^s$ and $F_r^s$ respectively represent a left feature image and a right feature image; $\langle \cdot, \cdot \rangle$ represents an inner product operation; and N represents the number of channels of a feature image.

In some embodiments of the present disclosure, the single-scale cost aggregation is performed on the matching costs of the respective scales according to the following formula:

$$\tilde{C}(d, p) = \sum_{k=1}^{K^2} w_k \cdot C(d, p + p_k + \Delta p_k) \cdot m_k$$

where $\tilde{C}(d, p)$ represents a matching cost obtained after the single-scale aggregation is performed on parallax d at position p of a feature image; C represents a matching cost before aggregation; $K^2$ represents the number of sampling points; $p_k$ is a fixed offset of each sampling point k; $\Delta p_k$ is an adaptive offset that is calculated by an algorithm on the basis of the matching cost C before aggregation; $m_k$ is an adaptive weight that is calculated by an algorithm on the basis of the matching cost C before aggregation; and $w_k$ is a parameter updated on the basis of the training of the binocular parallax estimation model.

In some embodiments of the present disclosure, the multi-scale cost aggregation is performed on the single-scale aggregated costs output by the single-scale cost aggregation module according to the following formulas:

$$\hat{C}^s = \sum_{t=1}^{s} f_t(\tilde{C}^t), s = 1, 2, \ldots, S,$$

$$f_t = \begin{cases} I, t = s \\ (s - t)stride - 2 \ 3x3convs, t < s \\ upsampling \oplus 1x1 \ conv, t > s \end{cases}$$

where $\hat{C}$ represents a matching cost after multi-scale aggregation; $\tilde{C}^t$ represents a single-scale aggregated cost output by the single-scale cost aggregation module under scale t; $f_t$ represents a transformation function of the matching costs under different scales: if t=k, the matching costs are identically equal under the scale before and after multi-scale aggregation; if t<s, $f_t$ represents $3 \times 3$ two-dimensional (2D) convolution to perform downsampling on the matching costs before multi-scale aggregation and adjust the number of channels of a feature image; and if t>s, $f_t$ represents first performing upsampling on the matching costs before multi-scale aggregation and then using $1 \times 1$ 2D convolution to adjust the number of channels of a feature image.

In some embodiments of the present disclosure, the parallax regression is performed on the multi-scale aggregated costs output by the multi-scale cost aggregation module to obtain an estimated parallax of the left image and the right image, for example, the sample left image and the sample right image, according to the following formulas:

$$\tilde{d}_p = \sum_{d=0}^{D_{max}-1} dx\sigma_p(d)$$

$$\sigma_p = \mathrm{softmax}(\hat{C}_p)$$

where $\tilde{d}_p$ represents an estimated parallax at position p; $\sigma_p(d)$ represents a probability indicating that the parallax at position p is possibly d; $D_{max}$ represents a maximum parallax; and $\hat{C}_p$ represents a multi-scale aggregated cost at position p.

In some embodiments of the present disclosure, the error between the parallax label and the estimated parallax is calculated according to the following formulas:

$$L_{total} = \sum_{i=1}^{S} \lambda_i \cdot L_i$$

$$L_i = \sum_p \left[ V(p) \cdot L(D_{pred}^i(p), D_{gt}(p)) + (1 - V(p)) \cdot L(D_{pred}^i|(p), D_{pseudo}(p)) \right]$$

where $L_{total}$ represents a total error; $L_i$ represents errors on the S scales respectively; $L(\cdot,\cdot)$ represents a loss function; V(p) represents whether there is a true value at position p of the parallax label; $D_{pred}^i(p)$ represents a parallax predicted at position p; $D_{gt}(p)$ represents a true value; $D_{pseudo}(p)$ represents a pseudo parallax label generated by a pretraining network; and $\lambda_i$ represents an error weight of scale i.

In some embodiments of the present disclosure, during training of the binocular parallax estimation model, the multi-scale cost aggregation module respectively performs, on the basis of each size, the multi-scale cost aggregation on the single-scale aggregated costs output by the single-scale cost aggregation module to obtain the multi-scale aggregated cost corresponding to each size.

According to another aspect of the present disclosure, a binocular parallax estimation method is further provided, including:

acquiring a left image to be estimated and a right image to be estimated;
inputting the left image to be estimated and the right image to be estimated to the binocular parallax estimation model trained using the above-mentioned binocular parallax estimation model training method, wherein in the binocular parallax estimation, the multi-scale cost aggregation module is merely configured for performing multi-scale cost aggregation based on one scale on the single-scale aggregation costs output by the single-scale cost aggregation module; and
performing upsampling on a quasi-estimated parallax output by the binocular parallax estimation model, and obtaining an estimated parallax.

According to still another aspect of the present disclosure, an electronic device is further provided. The electronic device includes a processor and a storage medium. The storage medium stores computer instructions. The computer instructions, when run by the processor, execute the above steps.

According to yet another aspect of the present disclosure, a computer-readable storage medium is further provided. The storage medium stores a computer program. The computer program, when run by a processor, performs the binocular parallax estimation model training method and/or the binocular parallax estimation method of any embodiment. In some embodiments, the computer-readable storage medium is a non-transitory computer-readable storage medium.

According to still yet another aspect of the present disclosure, a computer program product is further provided, including computer instructions stored on a computer storage medium. The computer instructions, when run by a processor, perform the binocular parallax estimation model training method and/or the binocular parallax estimation method of any embodiment.

According to still yet another aspect of the present disclosure, a computer program is further provided, which is configured for causing a processor to perform the binocular parallax estimation model training method and/or the binocular parallax estimation method of any embodiment.

Compared with the existing technology, the present disclosure has the advantages below:

The defects in a method with a large amount of computation, long time consumed, and poor effects in estimating an edge and textureless region of an object are solved by using a new network model structure and an optimized model training method, thereby prompting the application of a parallax estimation method based on a binocular image in different fields.

BRIEF DESCRIPTION OF THE DRAWINGS

The above-mentioned and other features and advantages of the present disclosure will become more apparent by describing example implementation modes in detail with reference to the accompanying drawings.

Fig. 1 illustrates a flowchart of a binocular parallax estimation model training method according to an exemplary embodiment of the present disclosure;

Fig. 2 illustrates a schematic diagram of a binocular parallax estimation model training method according to an exemplary embodiment of the present disclosure;

Fig. 3 illustrates a flowchart of a binocular parallax estimation method according to an exemplary embodiment of the present disclosure;

Fig. 4 illustrates a schematic diagram of a binocular parallax estimation method according to an exemplary embodiment of the present disclosure;

Fig. 5 illustrates a module diagram of a binocular parallax estimation model training apparatus according to an exemplary embodiment of the present disclosure;

Fig. 6 illustrates a module diagram of a binocular parallax estimation method according to an exemplary embodiment of the present disclosure;

Fig. 7 illustrates a schematic diagram of a computer-readable storage medium in an exemplary embodiments of the present disclosure; and

Fig. 8 illustrates a schematic diagram of an electronic device in an exemplary embodiment of the present disclosure.

DETAILED DESCRIPTION

Example implementation modes will be now described more comprehensively with reference to the accompanying drawings. However, the exemplary implementation modes can be embodied in a variety of forms and should not be construed as being limited to the examples set forth herein. Rather, these implementation modes are provided to make the present disclosure more comprehensive and complete, and fully convey the concept of the exemplary implementation modes to those skilled in the art. The features, structures or characteristics described may be combined in one or more implementation modes in any proper manner.

In addition, the drawings are merely exemplary illustrations of the present disclosure, and are not necessarily drawn to scale. The same reference numerals in the drawings denote the same or similar parts, and a repetitive description thereof will be omitted. Some of the block diagrams shown in the drawings are functional entities and do not necessarily correspond to physically or logically independent entities. These functional entities may be implemented in the form of software, or implemented in one or more hardware modules or integrated circuits, or implemented in different networks and/or processor devices and/or microcontroller devices.

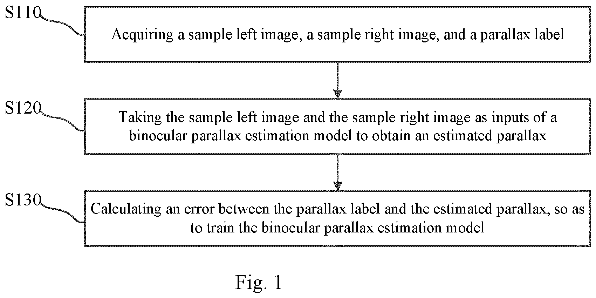

In order to overcome the defects in the existing technology, the present disclosure provides a binocular parallax estimation model training method, as shown in Fig. 1. Fig. 1 illustrates a flowchart of a binocular parallax estimation model training method according to an embodiment of the present disclosure. Fig. 1 shows the following:

Step S110: acquiring a sample left image, a sample right image, and a parallax label.

In some embodiments, the sample left image and the sample right image may be corrected sample views. The parallax mentioned in all the embodiments of the present disclosure refers to a parallax distance between a left image and a right image, for example, between the sample left image and the sample right image.

Step S120: taking the sample left image and the sample right image as inputs of a binocular parallax estimation model.

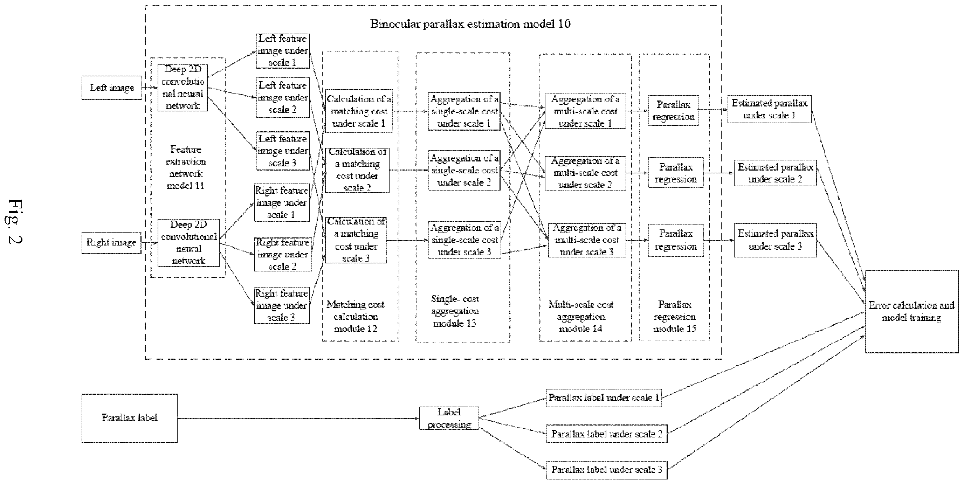

In some embodiments, the binocular parallax estimation model includes a feature extraction network module, a matching cost calculation module, a single-scale cost aggregation module, a multi-scale cost aggregation module, and a parallax regression model. Specifically referring to Fig. 2, Fig. 2 illustrates a flowchart of a training method for a binocular parallax estimation model 10 according to an embodiment of the present disclosure.

In some embodiments, the feature extraction network module 11 is configured for extracting left feature images of an input left image on multiple scales and extracting right feature images of an input right image on multiple scales.

The present disclosure does not limit a quantity of scales and a specific numerical value of each scale. For clarity, in this embodiment of the present disclosure, the following parameters are taken as an example for explanation: Three scales are provided, where scale 1 is 1/3 of an original image size; scale 2 is 1/6 of the original image size; and scale 3 is 1/12 of the original image size. A feature image of scale 1, a feature image of scale 2, and a feature image of scale 3 are all feature images of an original image that are scaled down at the same proportion.

In some embodiments, the feature extraction network module 11 may include two deep 2D convolutional neural networks to extract features of the left image and features of the right image respectively. Further, the two deep 2D convolutional neural networks may share parameters, and the parameters in the two deep 2D convolutional neural networks may be adjusted by training the binocular parallax estimation model 10.

In some embodiments, the matching cost calculation module 12 is configured for calculating matching costs of the left feature images and the right feature images on the same scales.

In some embodiments, the matching cost calculation module 12 may calculate a matching cost of the left feature image on scale 1 and the right feature image on scale 1; calculate a matching cost of the left feature image on scale 2 and the right feature image on scale 2; and calculate a matching cost of the left feature image on scale 3 and the right feature image on scale 3.

In some embodiments, the matching costs are inversely correlated with a similarity between a point at a certain position in the left image and a point at a certain position in the right image. In other words, in some embodiments, if the similarity between the point at the certain position in the left image and the point at the certain position in the right image is higher, the matching cost is smaller, and the points are more likely to be the same point. If the similarity between the point at the certain position in the left image and the point at the certain position in the right image is lower, the matching cost is larger, and the points are more likely to not be the same point.

In some embodiments, the matching costs of the left feature images and the right feature images on the same scales are calculated according to the following formula:

$$C^s(d, h, w) = \frac{1}{N} \langle F_l^s(h, w), F_r^s(h, w - d) \rangle$$

where $C^s(d, h, w)$ represents a matching cost of parallax d at position (h, w) under scale s, wherein h and w respectively represent horizontal and vertical coordinates of a feature image; $F_1^s$ and $F_r^s$ respectively represent a left feature image and a right feature image; $\langle \cdot, \cdot \rangle$ represents an inner product operation; and N represents the number of channels of a feature image. Thus, matching cost $C^1(d, h, w)$ of parallax d at position (h, w) under scale 1 can be calculated on the basis of $F_1^s$ and $F_r^s$; matching cost $C^2(d, h, w)$ of parallax d at position (h, w) under scale 2 can be calculated on the basis of $F_1^2$ and $F_r^2$; and matching cost $C^3(d, h, w)$ of parallax d at position (h, w) under scale 1 can be calculated on the basis of $F_1^3$ and $F_r^3$.

In some embodiments, the single-scale cost aggregation module 13 is configured for respectively performing single-scale cost aggregation on the matching costs (for example, $C^1(d, h, w)$, $C^2(d, h, w)$, and $C^3(d, h, w)$) of the respective scales output by the matching cost calculation module.

In some embodiments, the single-scale cost aggregation is performed on the matching costs of the respective scales according to the following formula:

$$\tilde{C}(d, p) = \sum_{k=1}^{K^2} w_k \cdot C(d, p + p_k + \Delta p_k) \cdot m_k$$

where $\tilde{C}(d, p)$ represents a matching cost obtained after the single-scale aggregation is performed on parallax d at position p of a feature image; C represents a matching cost (that is $C^1(d, h, w)$, $C^2(d, h, w)$, and $C^3(d, h, w)$ before aggregation, where p can also be represented in the form of horizontal and vertical coordinates of (h, w)); $K^2$ represents the number of sampling points (for example, sampling can be performed using a 3x3 sampling window, a 5x5 sampling window, and a 7x7 sampling window); $p_k$ is a fixed offset of each sampling point k; $\Delta p_k$ is an adaptive offset that is calculated by an algorithm on the basis of the matching cost C before aggregation; $m_k$ is an adaptive weight that is calculated by an algorithm on the basis of the matching cost C before aggregation; and $w_k$ is a parameter updated on the basis of the training of the binocular parallax estimation model. Thus, the matching costs of the $K^2$ sampling points at position p may be aggregated together through the sampling windows. Specifically, the single-scale cost aggregation module 13 may obtain a single-scale aggregated cost $\tilde{C}(d, p)$; under scale 1 according to the aggregation of matching cost $C^1$ (d, h, w) of scale 1; obtain a single-scale aggregated cost $\tilde{C}(d, p)$; under scale 2 according to the aggregation of matching cost $C^2$ (d, h, w) of scale 2; and obtain a single-scale aggregated cost $\tilde{C}(d, p)$ under scale 3 according to the aggregation of matching cost $C^3$ (d, h, w) of scale 3.

In some embodiments, the multi-scale cost aggregation module 14 is configured for performing multi-scale cost aggregation on the single-scale aggregation costs output by the single-scale cost aggregation module 13.

In some embodiments, during training of the binocular parallax estimation model 10, the multi-scale cost aggregation module 14 respectively performs, on the basis of each size, the multi-scale cost aggregation on the single-scale aggregated costs output by the single-scale cost aggregation module 13 to obtain the multi-scale aggregated cost corresponding to each size. As shown in Fig. 2, the multi-scale cost aggregation module 14 obtains a multi-scale aggregated cost under scale 1 on the basis of the aggregation of the single-scale aggregated cost under scale 1, the single-scale aggregated cost under scale 2, and the single-scale aggregated cost under scale 3; obtains a multi-scale aggregated cost under scale 2 on the basis of the aggregation of the single-scale aggregated cost under scale 1, the single-scale aggregated cost under scale 2, and the single-scale aggregated cost under scale 3; and obtains a multi-scale aggregated cost under scale 3 on the basis of the aggregation of the single-scale aggregated cost under scale 1, the single-scale aggregated cost under scale 2, and the single-scale aggregated cost under scale 3.

In some embodiments, the multi-scale cost aggregation is performed on the single-scale aggregated costs output by the single-scale cost aggregation module according to the following formulas:

$$\hat{C}^s = \sum_{t=1}^{s} f_t(\tilde{C}^t), s = 1, 2, \ldots, S,$$

$$f_t = \begin{cases} I, t = s \\ (s - t)stride - 2 \ 3x3convs, t < s \\ upsampling \oplus 1x1 \ conv, t > s \end{cases}$$

where $\hat{C}$ represents a matching cost after multi-scale aggregation; $\tilde{C}^t$ represents a single-scale aggregated cost output by the single-scale cost aggregation module under scale t; $f_t$ represents a transformation function of the matching costs under different scales: if t=k, the matching costs are identically equal under the scale before and after multi-scale aggregation; if t<s, $f_t$ represents $3 \times 3$ two-dimensional (2D) convolution to perform downsampling on the matching costs before multi-scale aggregation and adjust the number of channels of a feature image; and if t>s, $f_t$ represents first performing upsampling on the matching costs before multi-scale aggregation and then using $1 \times 1$ 2D convolution to adjust the number of channels of a feature image. Specifically, t represents a serial number of scales of multi-scale aggregated costs that are to be obtained by the multi-scale cost aggregation module 14.

In some embodiments, the parallax regression model 15 is configured for performing parallax regression on the multi-scale aggregated costs output by the multi-scale cost aggregation module 14 to obtain an estimated parallax of the left image and the right image, for example, the sample left image and the sample right image.

In some embodiments, as shown in Fig. 2, during the training of the binocular parallax estimation model 10, the parallax regression model 15 performs parallax regression on the multi-scale aggregated cost under scale 1 to obtain an estimated parallax of scale 1; performs parallax regression on the multi-scale aggregated cost under scale 2 to obtain an estimated parallax of scale 2; and performs parallax regression on the multi-scale aggregated cost under scale 3 to obtain an estimated parallax of scale 3.

In some embodiments, the parallax regression is performed on the multi-scale aggregated costs output by the multi-scale cost aggregation module to obtain an estimated parallax of the left image and the right image, for example, the sample left image and the sample right image, according to the following formulas:

$$\tilde{d}_p = \sum_{d=0}^{D_{max}-1} dx\,\sigma_p(d)$$

$$\sigma_p = \mathrm{softmax}(\hat{C}_p)$$

where $\tilde{d}_p$ represents an estimated parallax at position p; $\sigma_p(d)$ represents a probability indicating that the parallax at position p is possibly d; $D_{max}$ represents a maximum parallax; and $\hat{C}_p$ represents a multi-scale aggregated cost at position p.

Step S130: calculating an error between the parallax label and the estimated parallax, so as to train the binocular parallax estimation model.

In some embodiments of the present disclosure, the error between the parallax label and the estimated parallax is calculated according to the following formulas:

$$L_{total} = \sum_{i=1}^{S} \lambda_i \cdot L_i$$

$$L_i = \sum_p \left[ V(p) \cdot L(D_{pred}^i(p), D_{gt}(p)) + (1 - V(p)) \cdot L(D_{pred}^i(p), D_{pseudo}(p)) \right]$$

where $L_{total}$ represents a total error; $L_i$ represents errors on the S scales respectively; $L(\cdot,\cdot)$ represents a loss function;

$V(p)$ represents whether there is a true value at position p of the parallax label; $D_{pred}^i(p)$ represents a parallax predicted at position p; $D_{gt}(p)$ represents a true value; $D_{pseudo}(p)$ represents a pseudo parallax label generated by a pretraining network; and $\lambda_i$ represents an error weight of scale i.

In the foregoing embodiment of the three scales, S in the above formula is s by default, $\lambda_1$=1, $\lambda_2$=0.6, $\lambda_3$=0.3. The setting of the weight is merely schematic, which will not be limited in the present disclosure. Further, in this embodiment, $L(\cdot,\cdot)$ represents a smooth L1 loss function, which will not be limited in the present disclosure. Other types of loss functions also fall within the protection scope of the present disclosure.

Specifically, in all the embodiments of the present disclosure, the parallax label (a true value, an actual parallax) can be acquired using other algorithms or measures. If the parallax label is missing, the sample left image and the sample right image can be calculated through a pretraining network, so as to obtain a pseudo-parallax label, thereby improving the algorithm accuracy. The pretraining network may have the same structure as or a different structure from the binocular parallax estimation model 10, which will not be limited in the present disclosure.

Specifically, in all the embodiments of the present disclosure, step S130 may adjust and update parameters of the binocular parallax estimation model 10 according to the calculated error by using a back propagation algorithm.

According to the binocular parallax estimation model provided in some embodiments of the present disclosure, the defects in a method with a large amount of computation, long time consumed, and poor effects in estimating an edge and textureless region of an object are solved by using a new network model structure and an optimized model training method, thereby prompting the application of a parallax estimation method based on a binocular image in different fields.

The above only schematically describes the binocular parallax estimation model training method provided in the present disclosure. The present disclosure can achieve more variations which will not be elaborated here.

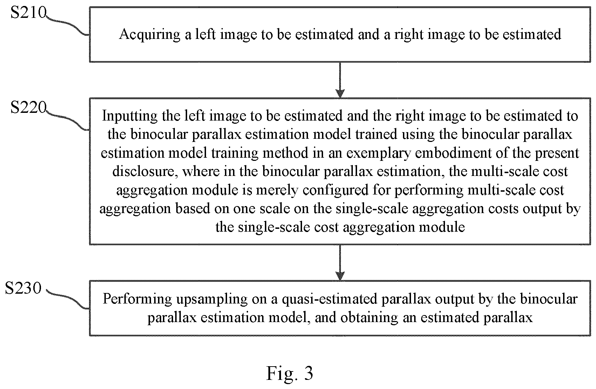

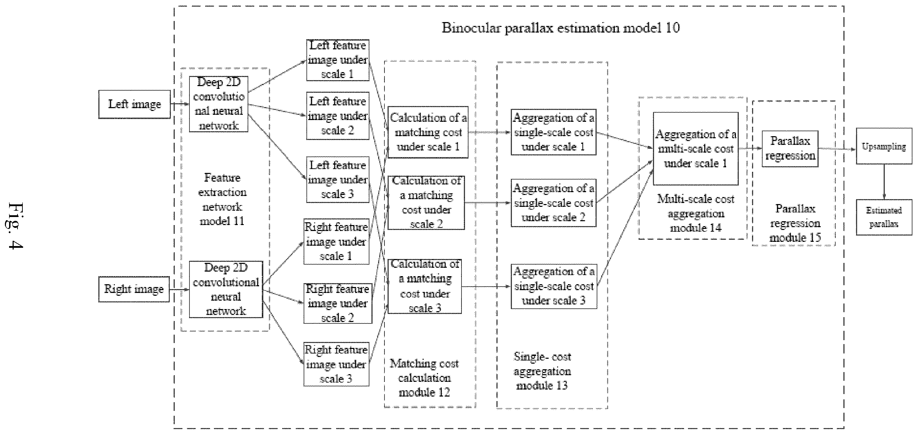

The present disclosure further provides a binocular parallax estimation method. With reference to Fig. 3 and Fig. 4, Fig. 3 illustrates a flowchart of a binocular parallax estimation method according to an embodiment of the present disclosure, and Fig. 4 illustrates a schematic diagram of a binocular parallax estimation method according to an embodiment of the present disclosure. The binocular parallax estimation method includes the following steps:

Step S210: acquiring a left image to be estimated and a right image to be estimated.
Step S220: inputting the left image to be estimated and the right image to be estimated to the binocular parallax estimation model trained using the above-mentioned binocular parallax estimation model training method, where in the binocular parallax estimation, the multi-scale cost aggregation module is merely configured for performing multi-scale cost aggregation based on one scale on the single-scale aggregation costs output by the single-scale cost aggregation module.

In some embodiments, as shown in Fig. 4, a difference from the training process of the binocular parallax estimation model 10 is as follows: In the estimation process, the multi-scale cost aggregation module 14 merely obtains the multi-scale aggregated cost under scale 1 on the basis of the aggregation of the single-scale aggregated cost under scale 1, the single-scale aggregated cost under scale 2, and the single-scale aggregated cost under scale 3. Thus, the parallax regression module 15 merely performs the parallax regression on the multi-scale aggregated cost under scale 1 to obtain a quasi-estimated parallax under scale 1.

Step S230: performing upsampling on a quasi-estimated parallax output by the binocular parallax estimation model, and obtaining an estimated parallax.

In some embodiments, in step S230, it is equivalent that the quasi-estimated parallax under scale 1 is reduced to a parallax in the original image size as the estimated parallax.

The above only schematically describes the binocular parallax estimation method provided in the present disclosure, which will not be limited in the present disclosure. The multi-scale cost aggregation module 14 may also acquire the multi-scale aggregated cost under scale 2, and the parallax regression module 15 only performs parallax regression on the multi-scale aggregated cost under scale 2 to obtain a quasi-estimated parallax under scale 2, and further performs upsampling on the basis of step S230 to obtain an estimated parallax. Or, the multi-scale cost aggregation module 14 may also acquire the multi-scale aggregated cost under scale 3, and the parallax regression module 15 only performs parallax regression on the multi-scale aggregated cost under scale 3 to obtain a quasi-estimated parallax under scale 3, and further performs upsampling on the basis of step S230 to obtain an estimated parallax. The present disclosure can achieve more variations which will not be elaborated here.

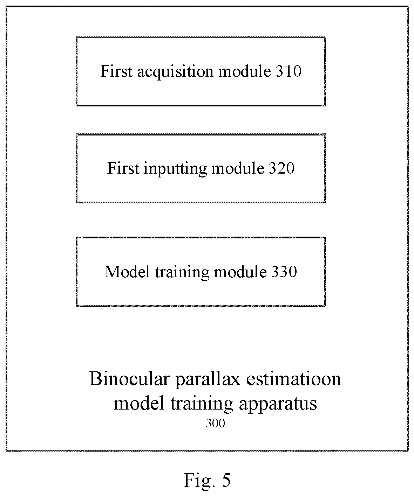

The present disclosure further provides a binocular parallax estimation model training apparatus. Fig. 5 illustrates a module diagram of a binocular parallax estimation model training apparatus according to an embodiment of the present disclosure. The binocular parallax estimation model training apparatus 300 includes a first acquisition module 310, a first inputting module 320, and a training module 330.

In some embodiments, the first acquisition module 310 is configured for acquiring a sample left image, a sample right image, and a parallax label.

In some embodiments, the first inputting module 320 is configured for taking the sample left image and the sample right image as inputs of a binocular parallax estimation model.

In some embodiments, the binocular parallax estimation model includes a feature extraction network module, a matching cost calculation module, a single-scale cost aggregation module, a multi-scale cost aggregation module, and a parallax regression model.

In some embodiments, the feature extraction network module is configured for extracting left feature images of an input left image on multiple scales and extracting right feature images of an input right image on multiple scales.

In some embodiments, the matching cost calculation module is configured for calculating matching costs of the left feature images and the right feature images on the same scales.

In some embodiments, the single-scale cost aggregation module is configured for performing single-scale cost aggregation on the matching costs of the respective scales output by the matching cost calculation module.

In some embodiments, the multi-scale cost aggregation module is configured for performing multi-scale cost aggregation on the single-scale aggregation costs output by the single-scale cost aggregation module.

In some embodiments, the parallax regression model is configured for performing parallax regression on the multi-scale aggregated costs output by the multi-scale cost aggregation module to obtain an estimated parallax of the left image and the right image, for example, the sample left image and the sample right image.

In some embodiments, the training module 330 is configured for calculating an error between the parallax label and the estimated parallax, so as to train the binocular parallax estimation model.

Fig. 5 only illustrates the module diagram of the binocular parallax estimation model training apparatus 300 provided in the present disclosure. Division, combination, and addition of the modules all fall within the protection scope of the present disclosure without departing from the idea of the present disclosure.

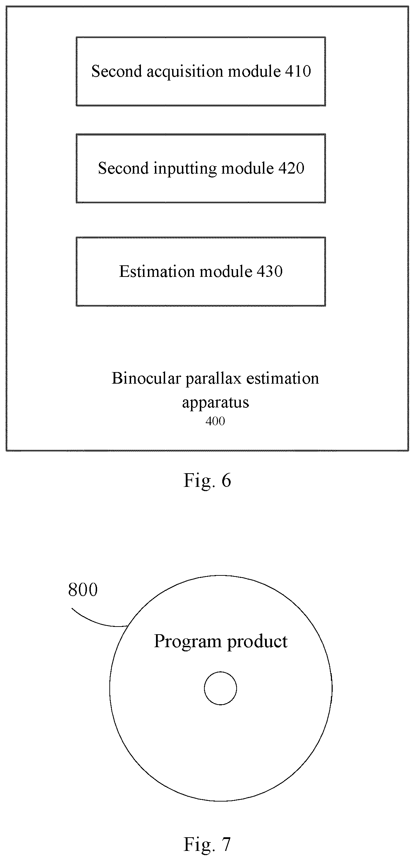

The present disclosure further provides a binocular parallax estimation apparatus. Fig. 6 illustrates a module diagram of a binocular parallax estimation apparatus according to an embodiment of the present disclosure. The binocular parallax estimation apparatus 400 includes a second acquisition module 410, a second inputting module 420, and an estimation module 430.

In some embodiments, the first acquisition module 410 is configured for acquiring a left image to be estimated and a right image to be estimated.

In some embodiments, the second inputting module 420 is configured for inputting the left image to be estimated and the right image to be estimated to the binocular parallax estimation model trained using the above-mentioned binocular parallax estimation model training method, where in the binocular parallax estimation, the multi-scale cost aggregation module is merely configured for performing multi-scale cost aggregation based on one scale on the single-scale aggregation costs output by the single-scale cost aggregation module.

In some embodiments, the estimation module 430 is configured for performing upsampling on a quasi-estimated parallax output by the binocular parallax estimation model, and obtaining an estimated parallax.

Fig. 6 only illustrates the module diagram of the binocular parallax estimation apparatus 400 provided in the present disclosure. Division, combination, and addition of the modules all fall within the protection scope of the present disclosure without departing from the idea of the present disclosure.

The exemplary embodiments of the present disclosure further provide a computer-readable storage medium which stores a computer program. The program, when run by a processor for example, can implement the steps of the binocular parallax estimation model training method and/or the binocular parallax estimation method of any one of the embodiments. In some possible implementations, the various aspects of the present disclosure can also be implemented in the form of a program product, which includes program code. When the program product is run by a processor, for example, on a terminal device, the program codes are configured for causing the terminal device to execute the steps described in the binocular parallax estimation model training method and/or binocular parallax estimation method section of this specification according to the various exemplary implementations of the present disclosure.

Referring to Fig. 7, a program product 800 for implementing the above method according to the implementation of the present disclosure is described, which can use a portable compact disc read-only memory (CD-ROM) and include program codes, and can be run by a processor, for example, on a terminal device such as a personal computer. However, the program product of the present disclosure is not limited to this. In some embodiments of the present disclosure, the computer-readable storage medium can be any tangible medium containing or storing a program. The program can be used by or in combination with an instruction execution system, apparatus, or device. In some embodiments of the present disclosure, the computer-readable storage medium is a nonvolatile computer-readable storage medium.

The program product may use any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or a combination of any of the above. More specific examples (a non-exhaustive list) of the computer-readable storage medium may include, but are not limited to: an electrical connection with one or more wires, a portable disk, a hard disk, a random access memory (RAM), a read-only memory (ROM), an erasable programmable read-only memory (EPROM or flash memory), an optical fiber, a CD-ROM, an optical storage device, a magnetic storage device, or any suitable combination of the above.

The computer-readable signal medium may include a data signal propagated in a baseband or as a part of a carrier wave, and a computer-readable program code is carried. This propagated data signal can take many forms, including, but is not limited to, an electromagnetic signal, an optical signal, or any suitable combination of the above. The computer-readable storage medium may also be any computer-readable medium other than the computer-readable storage medium. The computer-readable medium may send, propagate or transmit a program for use by or in combination with the instruction execution system, apparatus, or device. The program code contained on the computer-readable storage medium may be transmitted by any suitable medium, including, but is not limited to: radio, a wire, an optical cable, a radio frequency (RF), and the like, or any suitable combination of the above.

The program code configured for performing the operations of the present disclosure can be written in any combination of one or more programming languages. The programming languages include, but are not limited to, object-oriented programming languages such as Java and C++, and also include conventional procedural programming languages such as "C" language or similar programming languages. The program code can be executed entirely on a tenant computing device, executed partly on a tenant device, executed as an independent software package, executed partly on the tenant computing device and partly on a remote computing device, or executed entirely on the remote computing device or a server. In the case of involving the remote computing device, the remote computing device can be connected to the tenant computing device through any kind of network, including a local area network (LAN) or a wide area network (WAN), or can be connected to an external computing device (for example, using an Internet service provider by means of an Internet).

In an exemplary embodiment of the present disclosure, an electronic device is further provided. The electronic device may include a processor and a memory configured for storing executable instructions of the processor. The processor is configured for executing the steps of the binocular parallax estimation model training method and/or the binocular parallax estimation method in any one of the above embodiments by executing the executable instructions.

A person skilled in the technical field can understand that the various aspects of the present disclosure can be implemented as systems, methods, or program products. Therefore, the various aspects of the present disclosure can be specifically implemented in the following forms: a complete hardware implementation, a complete software implementation (including firmware, microcode, etc.), or a combined hardware and software implementation, which can be collectively referred to as "circuits", "modules", or "systems".

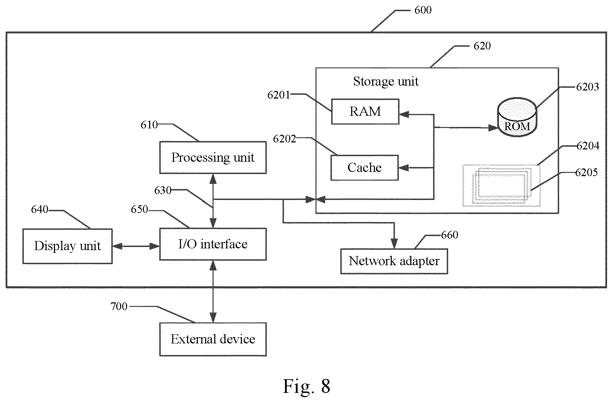

The electronic device 600 according to this implementation of the present disclosure will be described below with reference to Fig. 8. The electronic device 600 shown in Fig. 8 is only an example and should not impose any limitations on functions and scope of use of the embodiments of the present disclosure.

As shown in Fig. 8, the electronic device 600 is represented in the form of a universal computing device. Components of the electronic device 600 may include, but are not limited to: at least one processing unit 610, at least one storage unit 620, a bus 630 connecting different system components (including the storage unit 620 and the processing unit 610), a display unit 640, and the like.

The storage unit stores a program code. The program code can be executed by the processing unit 610, causing the processing unit 610 to execute the steps described in the binocular parallax estimation model training method and/or binocular parallax estimation method section of this specification according to the various exemplary implementations of the present disclosure. For example, the processing unit 610 may execute the steps shown in any one of Fig. 1 to Fig. 4.

The storage unit 620 may include a computer-readable medium in the form of a volatile storage unit, such as a RAM 6201 and/or a cache storage unit 6202, and may further include a ROM 6203.

The storage unit 620 may also include a program/general utility tool 6204 having a (at least one) group of program modules 6205. The program modules 6205 include but are not limited to: an operating system, one or more application programs, other program modules, and program data. Each or a certain combination of these examples may include an implementation of a network environment.

The bus 630 can represent one or more kinds of bus structures, including a storage unit bus or a storage unit controller, a peripheral bus, a graphics acceleration port, a processing unit, or a local area bus using any of the various bus structures.

The electronic device 600 may also communicate with one or more external devices 700 (for example, a keyboard, a pointing device, and a Bluetooth device), and may also communicate with one or more devices that enable tenants to interact with the electronic device 600, and/or with any device (for example, a router and a modem) that enables the electronic device 600 to communicate with one or more other computing devices. This communication may be carried out through input/output (I/O) interface 650. Furthermore, the electronic device 600 may communicate with one or more networks (for example, a LAN, a WAN, and/or a public network such as the Internet) through a network adapter 660. The network adapter 660 may communicate with other modules of the electronic device 600 via a bus 630. It should be understood that, although not shown, other hardware and/or software modules may be used in conjunction with the electronic device 600, including but not limited to: a microcode, a device driver, a redundant processing unit, an external magnetic disk drive array, a redundant array of independent disks (RAID) system, a magnetic tape driver, a data backup storage system, and the like.

Through the descriptions of the above implementations, it is easy for a person skilled in the art to understand that the example implementations described here can be implemented through software or by combining software with necessary hardware. Therefore, the technical solutions according to the implementations of the present disclosure can be embodied in the form of a software product. The software product can be stored in a nonvolatile storage medium (which may be a CD-ROM, a USB flash disk, a mobile hard disk, and the like) or on a network, including several instructions to enable a computing device (which can be a personal computer, a server, a network device, or the like) to perform the aforementioned binocular parallax estimation model training method and/or binocular parallax estimation method according to the implementations of the present disclosure.

Compared with the existing technology, some embodiments of the present disclosure have the advantages below:

The defects in a method with a large amount of computation, long time consumed, and poor effects in estimating an edge and textureless region of an object are solved by using a new network model structure and an optimized model training method, thereby prompting the application of a parallax estimation method based on a binocular image in different fields.

After considering the specification and implementing the present disclosure disclosed here, those skilled in the art will easily conceive other implementation solutions of the present disclosure. The present application is intended to cover any variations, uses, or adaptive changes of the present disclosure. These variations, uses, or adaptive changes follow the general principles of the present disclosure and include common general knowledge or conventional technical means in the technical field, which are not disclosed herein. The specification and the embodiments are considered as being exemplary only, with a true scope and spirit of the present disclosure being indicated by the following claims.

**Claims**

1. A binocular parallax estimation model training method, comprising:

    acquiring a sample left image, a sample right image, and a parallax label;
    taking the sample left image and the sample right image as inputs of a binocular parallax estimation model, wherein the binocular parallax estimation model comprises:

a feature extraction network module, configured for extracting left feature images of the input sample left image on multiple scales and extracting right feature images of the input sample right image on multiple scales;

a matching cost calculation module, configured for respectively calculating matching costs of the respective left feature images of the multiple scales and the right feature images on the same scales as the left feature images;

a single-scale cost aggregation module, configured for outputting single-scale aggregated costs by performing single-scale cost aggregation on the matching costs of the respective scales output by the matching cost calculation module;

a multi-scale cost aggregation module, configured for outputting multi-scale aggregated costs by performing multi-scale cost aggregation on the single-scale aggregation costs output by the single-scale cost aggregation module; and

a parallax regression model, configured for performing parallax regression on the multi-scale aggregated costs output by the multi-scale cost aggregation module to obtain an estimated parallax of the sample left image and the sample right image; and

calculating an error between the parallax label and the estimated parallax.

2. The binocular parallax estimation model training method according to claim 1, wherein the matching costs of the left feature images and the right feature images on the same scales as the left feature images are calculated according to the following formula:

$$C^s(d, h, w) = \frac{1}{N} \langle F_l^s(h, w), F_r^s(h, w - d) \rangle$$

wherein $C^s(d, h, w)$ represents a matching cost of parallax d at position (h, w) under scale s, wherein h and w respectively represent horizontal and vertical coordinates of a feature image; $F_1^s$ and $F_r^s$ respectively represent a left feature image and a right feature image; $<\cdot,\cdot>$ represents an inner product operation; and N represents the number of channels of a feature image.

3. The binocular parallax estimation model training method according to claim 1 or 2, wherein the single-scale cost aggregation is performed on the matching costs of the respective scales according to the following formula:

$$\tilde{C}(d, p) = \sum_{k=1}^{K^2} w_k \cdot C(d, p + p_k + \Delta p_k) \cdot m_k$$

wherein $\tilde{C}(d, p)$ represents a matching cost obtained after the single-scale aggregation is performed on parallax d at position p of a feature image; C represents a matching cost before aggregation; $K^2$ represents the number of sampling points; $p_k$ is a fixed offset of each sampling point k; $\Delta p_k$ is an adaptive offset that is calculated by an algorithm on the basis of the matching cost C before aggregation; $m_k$ is an adaptive weight that is calculated by an algorithm on the basis of the matching cost C before aggregation; and $w_k$ is a parameter updated on the basis of the training of the binocular parallax estimation model.

4. The binocular parallax estimation model training method according to any one of claims 1 to 3, wherein the multi-scale cost aggregation is performed on the single-scale aggregated costs output by the single-scale cost aggregation module according to the following formulas:

$$\hat{C}^s = \sum_{t=1}^{S} f_t(\tilde{C}^t), s = 1, 2, \ldots, S,$$

$$f_t = \begin{cases} I, t = s \\ (s-t)stride - 2 \ 3x3convs, t < s \\ upsampling \oplus 1x1 \ conv, t > s \end{cases}$$

wherein $\hat{C}$ represents a matching cost after multi-scale aggregation; $\tilde{C}^t$ represents a single-scale aggregated cost output by the single-scale cost aggregation module under scale t; $f_t$ represents a transformation function of the matching costs under different scales: if t=k, the matching costs are identically equal under the scale before and after multi-scale aggregation; if t<s, $f_t$ represents $3 \times 3$ two-dimensional (2D) convolution to perform downsampling on the matching costs before multi-scale aggregation and adjust the number of channels of a feature image; and if t>s, $f_t$ represents first performing upsampling on the matching costs before multi-scale aggregation and then using $1 \times 1$ 2D convolution to adjust the number of channels of a feature image.

5. The binocular parallax estimation model training method according to any one of claims 1 to 4, wherein the parallax regression is performed on the multi-scale aggregated costs output by the multi-scale cost aggregation module to obtain an estimated parallax of the sample left image and the sample right image according to the following formulas:

$$\tilde{d}_p = \sum_{d=0}^{D_{max}-1} dx \sigma_p(d)$$

$$\sigma_p = \text{softmax}(\hat{C}_p)$$

wherein $\tilde{d}_p$ represents an estimated parallax at position p; $\sigma_p(d)$ represents a probability indicating that the parallax at position p is possibly d; $D_{max}$ represents a maximum parallax; and $\hat{C}_p$ represents a multi-scale aggregated cost at position p.

6. The binocular parallax estimation model training method according to any one of claims 1 to 5, wherein the error between the parallax label and the estimated parallax is calculated according to the following formulas:

$$L_{total} = \sum_{i=1}^{S} \lambda_i \cdot L_i$$

$$L_i = \sum_p \left[ V(p) \cdot L(D_{pred}^i(p), D_{gt}(p)) + (1 - V(p)) \cdot L(D_{pred}^i|(p), D_{pseudo}(p)) \right]$$

wherein $L_{total}$ represents a total error; $L_i$ represents errors on the S scales respectively; $L(\cdot, \cdot)$ represents a loss function; V(p) represents whether there is a true value at position p of the parallax label; $D_{pred}^i(p)$ represents a parallax predicted at position p; $D_{gt}(p)$ represents a true value; $D_{pseudo}(p)$ represents a pseudo parallax label generated by a pretraining network; and $\lambda_i$ represents an error weight of scale i.

7. The binocular parallax estimation model training method according to any one of claims 1 to 6, wherein during training of the binocular parallax estimation model, the multi-scale cost aggregation module respectively performs, on the basis of each size, the multi-scale cost aggregation on the single-scale aggregated costs output by the single-scale cost aggregation module to obtain the multi-scale aggregated cost corresponding to each size.

8. A binocular parallax estimation method, comprising:

acquiring a left image to be estimated and a right image to be estimated;
inputting the left image to be estimated and the right image to be estimated to the binocular parallax estimation model trained using the binocular parallax estimation model training method according to any one of claims 1 to 7, wherein in the binocular parallax estimation, the multi-scale cost aggregation module is merely configured for performing multi-scale cost aggregation based on one scale on the single-scale aggregation costs output by the single-scale cost aggregation module; and
performing upsampling on a quasi-estimated parallax output by the binocular parallax estimation model, and obtaining an estimated parallax.

9. An electronic device, comprising:

a processor; and
a storage medium, wherein a computer program is stored on the storage medium, and the computer program, when run by the processor, performs:

the binocular parallax estimation model training method according to any one of claims 1 to 7; and/or
the binocular parallax estimation method according to claim 8.

10. A computer-readable storage medium, wherein computer instructions are stored on the computer-readable storage medium, and the computer instructions, when run by a processor, perform:

the binocular parallax estimation model training method according to any one of claims 1 to 7; and/or
the binocular parallax estimation method according to claim 8.

11. A computer program product, comprising computer instructions stored on a computer storage medium, wherein the computer instructions, when run by a processor, perform:

the binocular parallax estimation model training method according to any one of claims 1 to 7; and/or
the binocular parallax estimation method according to claim 8.

12. A computer program, configured for causing a processor to perform:

the binocular parallax estimation model training method according to any one of claims 1 to 7; and/or
the binocular parallax estimation method according to claim 8.

S110 — Acquiring a sample left image, a sample right image, and a parallax label

S120 — Taking the sample left image and the sample right image as inputs of a binocular parallax estimation model to obtain an estimated parallax

S130 — Calculating an error between the parallax label and the estimated parallax, so as to train the binocular parallax estimation model

Fig. 1

Fig. 2

S210 — Acquiring a left image to be estimated and a right image to be estimated

S220 — Inputting the left image to be estimated and the right image to be estimated to the binocular parallax estimation model trained using the binocular parallax estimation model training method in an exemplary embodiment of the present disclosure, where in the binocular parallax estimation, the multi-scale cost aggregation module is merely configured for performing multi-scale cost aggregation based on one scale on the single-scale aggregation costs output by the single-scale cost aggregation module

S230 — Performing upsampling on a quasi-estimated parallax output by the binocular parallax estimation model, and obtaining an estimated parallax

Fig. 3

Fig. 4

First acquisition module 310

First inputting module 320

Model training module 330

Binocular parallax estimatioon
model training apparatus
300

Fig. 5

Second acquisition module 410

Second inputting module 420

Estimation module 430

Binocular parallax estimation
apparatus
400

Fig. 6

800

Program product

Fig. 7

Fig. 8

## INTERNATIONAL SEARCH REPORT

| International application No. |
| --- |
| **PCT/CN2021/132577** |

| A. | CLASSIFICATION OF SUBJECT MATTER |
| --- | --- |

G06K 9/62(2022.01)i

According to International Patent Classification (IPC) or to both national classification and IPC

| B. | FIELDS SEARCHED |
| --- | --- |

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, EPODOC, WPI, CNKI, ISI: 双目, 视差, 估计, 模型, 训练, 左图, 右图, 特征, 匹配, 代价, 尺度, 聚合, 回归, 标签, 误差, binocular, parallax, estimation, model, training, left, right, picture, feature, match, cost, scale, aggregation, regression, label, error

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 112861940 A (SHANGHAI WESTWELL INFORMATION TECHNOLOGY CO., LTD.) 28 May 2021 (2021-05-28) <br> claims 1-10, description, paragraphs [0004]-[0038] | 1-12 |
| X | XU, Haofei et al. "AANet: Adaptive Aggregation Network for Efficient Stereo Matching" 《IEEE Conference on Computer Vision and Pattern Recognition (CVPR)》 , 19 June 2020 (2020-06-19), <br> full text, sections 2 and 3 | 1-12 |
| X | CN 111508013 A (UNIVERSITY OF SCIENCE AND TECHNOLOGY OF CHINA) 07 August 2020 (2020-08-07) <br> description, paragraphs [0019]-[0049] | 1, 7-12 |
| A | CN 110148179 A (BEIJING SKYLINE ROBOT TECHNOLOGY R & D CO., LTD.) 20 August 2019 (2019-08-20) <br> entire document | 1-12 |
| A | US 2020226777 A1 (SHENZHEN SENSETIME TECHNOLOGY CO., LTD.) 16 July 2020 (2020-07-16) <br> entire document | 1-12 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 February 2022** | **22 February 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/132577**

| Patent document cited in search report | | | Publication date (day/month/year) | Patent family member(s) | | | Publication date (day/month/year) |
|---|---|---|---|---|---|---|---|
| CN | 112861940 | A | 28 May 2021 | None | | | |
| CN | 111508013 | A | 07 August 2020 | None | | | |
| CN | 110148179 | A | 20 August 2019 | None | | | |
| US | 2020226777 | A1 | 16 July 2020 | WO | 2019149206 | A1 | 08 August 2019 |
| | | | | CN | 108335322 | A | 27 July 2018 |
| | | | | JP | 2020535547 | A | 03 December 2020 |
| | | | | SG | 11202003141 P | A | 28 May 2020 |
| | | | | KR | 20200049833 | A | 08 May 2020 |

Form PCT/ISA/210 (patent family annex) (January 2015)